# FASCICULE DE BREVET EUROPEEN

(11) **EP 1 930 670 B1**
(45) Date de publication et mention de la délivrance du brevet: **26.02.2014**
(21) Numéro de dépôt: 07122342.4
(22) Date de dépôt: 05.12.2007
(51) Int. Cl.: F25B 41/06

(54) **Organe de détente associant 2 capteurs de température d'un fluide réfrigérant qui sont destinés à être placés en entrée et en sortie d'un refroidisseur de gaz**
Druckreduzierorgan, das 2 Temperaturfühler einer Kühlflüssigkeit umfasst, die am Eingang und Ausgang eines Gaskühlers angebracht werden sollen
Expansion body associating two temperature sensors of a coolant fluid designed to be placed at the intake and output of a gas cooler

(30) Priorité: 08.12.2006 FR 0610701
(43) Date de publication de la demande: 11.06.2008
(73) Titulaire: Valeo Systèmes Thermiques, 78321 Le Mesnil Saint Denis Cedex (FR)
(72) Inventeur: Guitari, Imed, 78990 Elancourt (FR)
(74) Mandataire: Léveillé, Christophe

(56) Documents cités:
- EP-A- 1 695 849
- EP-A1- 0 450 703
- WO-A-82/04142
- DE-A1- 19 506 143
- DE-A1- 19 631 914
- DE-A1- 19 647 718
- JP-A- 2001 147 048
- JP-A- 2004 061 061
- US-A- 2 199 498
- US-A- 2 538 861
- US-A- 2 752 760

## Description

### Domaine technique de l'invention.

La présente invention est du domaine des installations de ventilation, de chauffage et/ou de climatisation, pour habitacle d'un véhicule notamment. Elle a pour objet un organe de détente constitutif d'une boucle de climatisation d'une telle installation ainsi qu'une telle boucle de climatisation.

### Etat de la technique.

Une installation de ventilation, de chauffage et/ou de climatisation d'un véhicule automobile par exemple est notamment destinée à réchauffer et inversement à refroidir de l'air pour améliorer le confort thermique des passagers du véhicule. A cette fin, une telle installation comprend une boucle de climatisation à l'intérieur de laquelle circule un fluide réfrigérant. Ce dernier est notamment susceptible d'être un composé hydrochlorofluorocarboné, R134a notamment, ou un composé organique, R744 ou dioxyde de carbone notamment. Le fluide réfrigérant subit un cycle thermodynamique à partir de sa circulation successive à travers divers éléments de la boucle de climatisation dont au moins un compresseur, un refroidisseur de gaz, un évaporateur qui est éventuellement associé à un accumulateur, un échangeur de chaleur interne à titre optionnel et un organe de détente, du type vanne d'expansion ou orifice tube par exemple.

Dans le cas particulier où l'organe de détente est une vanne d'expansion, l'organe de détente comprend une entrée de fluide réfrigérant et une sortie de fluide réfrigérant entre lesquels est ménagé un canal de circulation du fluide réfrigérant et l'organe de détente est équipé de moyens de régulation du débit de fluide réfrigérant circulant à l'intérieur du canal de circulation.

Selon un premier type de vanne d'expansion, les moyens de régulation sont du genre à contrôle électronique et comprennent une unité de contrôle électronique du débit de fluide réfrigérant circulant à travers la vanne, l'unité de contrôle étant couramment associée à une sonde électronique de température susceptible d'être placée dans le circuit de climatisation (voir par example EP 1 695 849).

Selon un deuxième type de vanne d'expansion, par exemple décrit par le document EP 1 666 817 (FUJIKOKI CORPORATION), les moyens de régulation sont du genre à contrôle thermostatique et comprennent une chambre principale logeant une membrane souple et étanche qui sépare la chambre principale en une première chambre élémentaire et une deuxième chambre élémentaire. La première chambre élémentaire est en communication avec le canal de circulation par l'intermédiaire d'un conduit de circulation du fluide réfrigérant qui loge un pointeau. Celui-ci est mobile entre une position de fermeture dans laquelle le pointeau interdit la circulation du fluide réfrigérant à l'intérieur du canal de circulation, et une position d'ouverture dans laquelle le pointeau autorise la circulation du fluide réfrigérant à l'intérieur du canal de circulation.

Il a été proposé par le document EP 1 666 817 d'équiper la vanne d'expansion thermostatique d'un capteur de température destiné à mesurer la température du fluide réfrigérant en sortie du refroidisseur de gaz. Ce capteur est principalement constitué d'un tube cylindrique réalisé en un matériau métallique présentant une bonne conductivité thermique. Le tube est relié par l'intermédiaire d'un capillaire à la deuxième chambre élémentaire de la vanne d'expansion thermostatique. Le tube, le capillaire et la deuxième chambre élémentaire forment conjointement une enceinte contenant un fluide de contrôle caloporteur. Le tube est collé contre une conduite de circulation qui véhicule le fluide réfrigérant depuis le refroidisseur de gaz vers l'échangeur de chaleur interne, de sorte qu'un équilibre thermique s'opère par conduction entre le fluide de contrôle contenu dans l'enceinte et le fluide réfrigérant contenu dans la conduite de circulation. Ces dispositions visent à simplifier la structure de la vanne d'expansion thermostatique et la circulation du fluide réfrigérant à l'intérieur de la boucle de climatisation.

Un problème général posé par un tel organe de détente réside dans le fait que son efficacité est aléatoire, et qu'elle est notamment insuffisante, voire nulle pour certaines valeurs de température du fluide réfrigérant. Il en découle un rendement de la boucle de climatisation qui est lui-même aléatoire, et qui est susceptible d'être faible, voire nul.

Plus particulièrement, l'organe de détente n'est pas en mesure d'adapter la pression du fluide réfrigérant en sortie du refroidisseur de gaz à une pression optimale de fonctionnement de la boucle de climatisation, ceci pour une température relativement quelconque du fluide réfrigérant en sortie du refroidisseur de gaz.

Par ailleurs, un tel organe de détente nécessite une charge importante en fluide de contrôle car le bulbe décrit dans l'art antérieur doit présenter une charge de 650kg/m³ pour opérer dans de bonnes conditions. Ce niveau de charge est la conséquence du fait que le bulbe est placé en sortie du refroidisseur de gaz. Une telle charge en fluide de contrôle nécessite aussi des tests de fonctionnement qui sont coûteux et fastidieux à mettre en oeuvre.

Enfin, il a été observé que dans le cas où le fluide réfrigérant est constitué d'un fluide supercritique, tel que le dioxyde de carbone, d'éventuelles perturbations du fonctionnement thermique du moteur du véhicule influent sur l'efficacité d'un tel organe de détente, et en conséquence sur les performances thermiques de la boucle de climatisation.

### Objet de l'invention.

Le but de la présente invention est de proposer un organe de détente constitutif d'une boucle de climatisation d'une installation de ventilation, de chauffage et/ou de climatisation pour habitacle d'un véhicule, cet organe de détente étant efficace dans des conditions de fonctionnement relativement quelconques. Il est également visé par la présente invention de proposer une boucle de climatisation à l'intérieur de laquelle circule un fluide réfrigérant, cette boucle de climatisation intégrant un tel organe de détente pour procurer un rendement satisfaisant quelque soit la température du fluide réfrigérant en sortie d'un refroidisseur de gaz qu'elle comporte, le fluide réfrigérant étant en outre susceptible d'être un fluide relativement quelconque, tel qu'un fluide organique, préférentiellement non polluant, dont la température critique est suffisamment basse pour que le cycle thermodynamique qu'il subit comporte au moins une étape isobare supercritique et au moins une étape isobare subcritique, et/ou tel qu'un fluide supercritique dont le comportement thermique est sensible aux aléas thermiques de son environnement.

La charge nécessaire en fluide de contrôle à l'intérieur de l'organe de détente selon l'invention offre un fonctionnement optimisé de la boucle de climatisation. Le fait de séparer le bulbe en un premier bulbe localisé à la sortie du refroidisseur de gaz et de placer un deuxième bulbe à l'entrée de ce même refroidisseur de gaz permet de moyenner la pression à l'intérieur des bulbes. En effet, la pression dans le second bulbe sera plus faible que celle dans le premier bulbe ce qui se traduira par une pression moyennée à l'intérieur de la chambre principale de l'organe de détente. La charge peut alors être réduite de l'ordre de 250kg/m³ pour passer de 650kg/m³ comme dans l'art antérieur à 400kg/m³. L'organe de détente ainsi obtenu ne nécessite pas des tests de fonctionnement fastidieux. La présente invention vise également à proposer une installation de ventilation, de chauffage et/ou de climatisation mettant en oeuvre une telle boucle de climatisation.

L'organe de détente de la présente invention est un organe de détente pour une boucle de climatisation constitutive d'une installation de ventilation, de chauffage et/ou de climatisation d'un véhicule notamment. L'organe de détente comprend une entrée et une sortie d'un fluide réfrigérant entre lesquelles est ménagé un canal de circulation du fluide réfrigérant. L'organe de détente comprend en outre une chambre principale logeant une membrane qui sépare la chambre principale en deux chambres élémentaires, dont une première chambre élémentaire qui est en relation avec le canal de circulation, et une deuxième chambre élémentaire qui est en relation avec un premier capteur de température.

Selon la présente invention, le premier capteur de température est en relation avec un deuxième capteur de température.

La mise en relation du premier capteur de température avec le deuxième capteur de température est avantageusement obtenue à partir d'une mise en communication d'une première capacité que comporte le premier capteur de température avec une deuxième capacité que comporte le deuxième capteur de température, cette mise en communication étant réalisée par l'intermédiaire d'un premier capillaire.

La mise en relation du premier capteur de température avec la deuxième chambre élémentaire est aussi avantageusement obtenue à partir d'une mise en communication de la première capacité avec la deuxième chambre élémentaire, cette mise en communication étant réalisée par l'intermédiaire d'un deuxième capillaire.

De préférence, la deuxième chambre élémentaire, la première capacité, la deuxième capacité, le premier capillaire et le deuxième capillaire forment conjointement une enceinte de confinement d'un fluide de contrôle.

De préférence encore, le fluide de contrôle est indifféremment identique ou différent du fluide réfrigérant.

Chacune des première et deuxième capacités est avantageusement délimitée par un tube respectif réalisé en un matériau thermiquement conducteur.

La boucle de climatisation de la présente invention comprend au moins un refroidisseur de gaz et au moins un organe de détente qui est équipé de moyens de régulation d'un débit d'un fluide réfrigérant circulant à l'intérieur de la boucle de climatisation.

Selon un autre aspect de la présente invention, les moyens de régulation comprennent un premier dispositif de mesure de température qui est placé en sortie du refroidisseur de gaz et un deuxième dispositif de mesure de température qui est placé en entrée du refroidisseur de gaz pour maintenir sensiblement constante la moyenne des densités D1 et D2 du fluide réfrigérant respectivement prise en entrée et en sortie du refroidisseur de gaz pour une température du fluide réfrigérant en sortie du refroidisseur de gaz comprise entre 20°C et 60°C.

Ces dispositions sont telles que le rendement du cycle thermodynamique que subit le fluide réfrigérant est satisfaisant pour une température relativement quelconque du fluide réfrigérant en sortie du refroidisseur de gaz, et notamment pour une température indifféremment subcritique ou supercritique. A titre d'exemple, la moyenne des densités du fluide réfrigérant en entrée et en sortie du refroidisseur de gaz est maintenue constante, de l'ordre de 400 kg/m³, pour un fluide réfrigérant constitué de dioxyde de carbone pour une températures du fluide réfrigérant en sortie du refroidisseur de gaz qui s'échelonne entre 20°C et 60°C.

Selon une première variante de réalisation, les premier et deuxième dispositifs de mesure de température sont respectivement constitués d'une première et deuxième sonde électronique de température qui sont associées à une unité de contrôle électronique.

Selon une première variante de réalisation, les moyens de régulation comprennent une enceinte comportant :
- une deuxième chambre élémentaire de l'organe de détente,
- une première capacité que comporte un premier capteur de température qui constitue le premier dispositif de mesure de température, la première capacité étant contigüe, c'est-à-dire en contact étroit ou encore placée contre une conduite d'évacuation du fluide réfrigérant hors du refroidisseur de gaz, et
- une deuxième capacité que comporte un deuxième capteur de température qui constitue le deuxième dispositif de mesure de température, la deuxième capacité étant contigüe, c'est-à-dire en contact étroit ou encore placée contre une conduite d'amenée du fluide réfrigérant vers le refroidisseur de gaz.

Le sens du mot contigü englobe aussi l'insertion de l'une et/ou l'autre des capacités au coeur de la conduite concernée, le transfert de température se faisant directement entre le fluide réfrigérant circulant dans la boucle et le ou les capteurs de températures.

La ou les capacités doivent être en mesure d'échanger thermiquement avec le fluide réfrigérant soit sans intermédiaire, soit avec un intermédiaire.

Le fluide réfrigérant est de préférence un fluide majoritairement constitué d'au moins un composé organique.

Le fluide réfrigérant est avantageusement un fluide dont la température critique est comprise entre 25°C et 35°C.

De préférence, le fluide réfrigérant est un fluide majoritairement constitué d'au moins un composé organique, tel que le butane, l'acétylène, l'ammoniac, le dioxyde de carbone ou tout autre composé organique analogue.

### Description des figures.

La présente invention sera mieux comprise, et des détails en relevant apparaîtront, à la lecture de la description qui va être faite de différentes formes de réalisation en relation avec les figures des planches annexées, dans lesquelles :
La fig.1 est une vue schématique d'une boucle de climatisation selon la présente invention.
Les fig.2 et fig.3 sont des vue schématiques de formes respectives de réalisation d'un organe de détente constitutif de la boucle de climatisation illustrée sur la fig.1.
La fig.4 est une représentation schématique de l'évolution de la densité D d'un fluide réfrigérant circulant à l'intérieur de la boucle de climatisation illustrée sur la fig.1, en fonction de la température T en sortie d'un refroidisseur de gaz de la boucle de climatisation.
La fig.5 est une représentation schématique de l'évolution du rendement R de la boucle de climatisation illustrée sur la fig.1 en fonction de la densité D du fluide réfrigérant en sortie du refroidisseur de gaz.
La fig.6 est un diagramme de Mollier illustrant un cycle thermodynamique que subit un fluide réfrigérant circulant à l'intérieur de la boucle de climatisation illustrée sur la fig.1.
La fig.7 est une représentation schématique de l'évolution du rendement R d'un cycle thermodynamique que subit le fluide réfrigérant circulant à l'intérieur d'une boucle de climatisation illustrée sur la fig.1 en fonction de la pression P du fluide réfrigérant en sortie du refroidisseur de gaz.

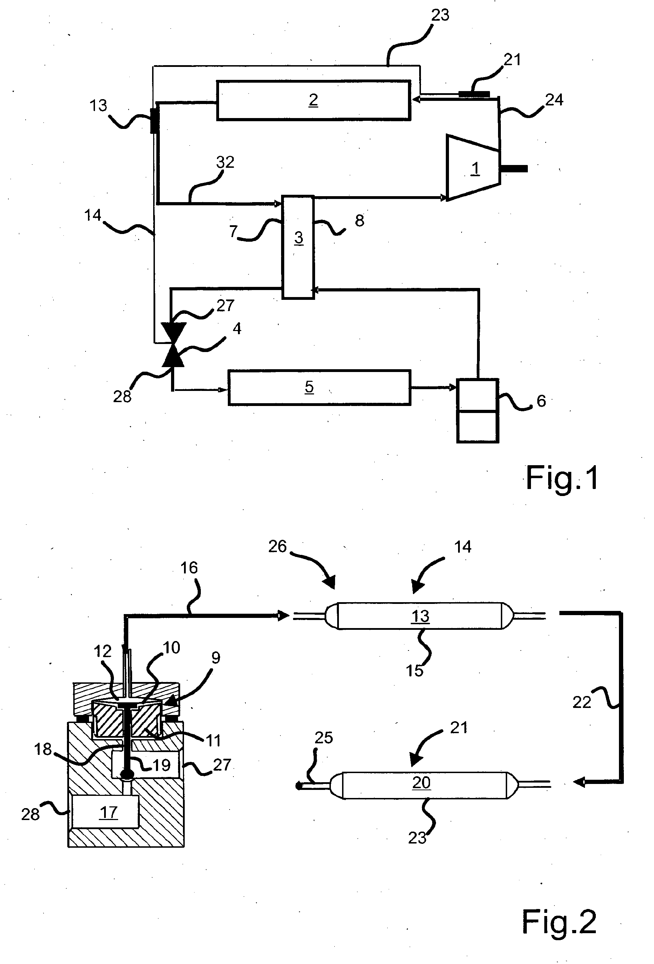

Sur la fig.1, une boucle de climatisation d'une installation de ventilation, de chauffage et/ou de climatisation d'un véhicule automobile notamment comprend une pluralité d'éléments dont un compresseur 1, un refroidisseur de gaz 2, un échangeur de chaleur interne 3, un organe de détente 4 et un évaporateur 5 qui est, selon la variante illustrée, associé à un accumulateur 6. Un fluide réfrigérant, supercritique notamment, tel que le dioxyde de carbone par exemple, circule successivement à l'intérieur des éléments de la boucle de climatisation pour y subir un cycle thermodynamique. Plus particulièrement, le fluide réfrigérant circule depuis le compresseur 1 vers le refroidisseur de gaz 2, puis vers une première face 7 de l'échangeur de chaleur interne 3, puis vers l'organe de détente 4, puis vers l'évaporateur 5 et l'accumulateur 6, et enfin vers une deuxième face 8 de l'échangeur de chaleur interne 3 pour retourner ensuite au compresseur 1.

Sur la fig.2, l'organe de détente 4 est une vanne d'expansion à contrôle thermostatique qui comprend une chambre principale 9 logeant une membrane souple 10 pour sa séparation en deux chambres élémentaires 11,12. La première chambre élémentaire 11 est en relation avec un canal de circulation 17 du fluide réfrigérant qui est ménagé entre une entrée 27 de fluide réfrigérant et une sortie 28 de fluide réfrigérant que comporte l'organe de détente 4. La mise en relation de la première chambre élémentaire 11 avec le canal de circulation est réalisée par l'intermédiaire d'un conduit de circulation 18. Ce dernier 18 loge un pointeau 19 qui est mobile entre une position de fermeture dans laquelle le pointeau 18 interdit la circulation du fluide réfrigérant à l'intérieur du canal de circulation 17, et une position d'ouverture dans laquelle le pointeau 19 autorise la circulation du fluide réfrigérant à l'intérieur du canal de circulation 17.

La deuxième chambre élémentaire 12 est en communication avec une première capacité 13 que comporte un premier capteur de température 14 du fluide réfrigérant qui est placé en sortie du refroidisseur de gaz 2, tel qu'illustré sur la fig.1. Le premier capteur de température 14 est constitué d'un tube 15 logeant la première capacité 13. Le tube 15 présente une conformation préférentiellement allongée telle qu'illustrée sur la fig.2 mais peut présenter une conformation relativement quelconque, par exemple en forme de fer à cheval pour être aisément fixé, par clipage notamment, sur la boucle de climatisation. Le premier capteur de température 14 est réalisé en un matériau métallique thermiquement conducteur, alliage d'aluminium notamment ou matériau analogue, qui est placé contre une première conduite 32 d'évacuation du fluide réfrigérant hors du refroidisseur de gaz 2. La première capacité 13 du premier capteur de température 14 est reliée à la deuxième chambre élémentaire 12 par l'intermédiaire d'un premier capillaire 16.

La première capacité 13 du premier capteur de température 14 est en relation avec une deuxième capacité 20 que comporte un deuxième capteur 21 de température par l'intermédiaire d'un deuxième capillaire 22. A la manière du premier capteur de température 14, le deuxième capteur de température 21 est constitué d'un tube allongé 23 réalisé en un matériau thermiquement conducteur qui est placé contre une deuxième conduite 24 de circulation du fluide réfrigérant depuis le compresseur 1 vers le refroidisseur de gaz 2. L'extrémité distale 25 du deuxième capteur de température 21 est obturée après l'introduction d'un fluide de contrôle caloporteur à l'intérieur d'une enceinte 26 formée conjointement par les première et deuxième capacités 13,20, les premier et deuxième capillaires 16,22 et la deuxième élémentaire 12. Le fluide de contrôle contenu à l'intérieur de l'enceinte 26 est préférentiellement identique au fluide réfrigérant qui circule à l'intérieur de la boucle de climatisation, c'est-à-dire le dioxyde de carbone selon l'exemple choisi, mais est susceptible d'être différent sans déroger aux règles de la présente invention. Selon une variante préférée de réalisation, le volume de la première capacité 13 du premier capteur de température 14 est supérieur au volume de la deuxième capacité 20 du deuxième capteur de température 21, toutefois, les première et deuxième capacités 13,20 sont susceptibles d'être de volume identique sans déroger aux règles de la présente invention.

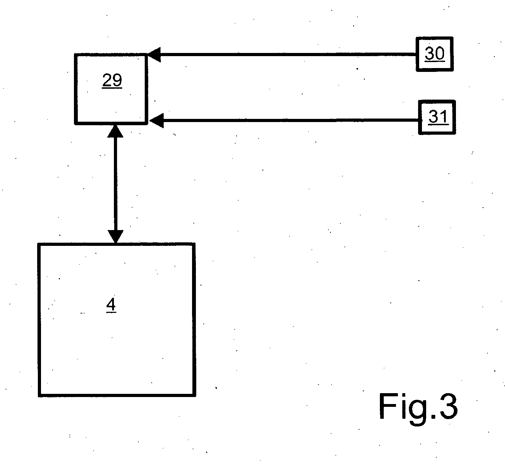

Sur la fig.3, l'organe de détente 4 est une vanne d'expansion à contrôle électronique qui comprend une unité de contrôle électronique 29 en relation avec des première et deuxième sondes de température 30,31.

D'une manière générale, il résulte de ces dispositions que le fluide réfrigérant subit un cycle thermodynamique dont le rendement est optimisé quelque soit la température du fluide réfrigérant en sortie du refroidisseur de gaz 2. Cette optimisation est obtenue à partir d'un maintien de la moyenne des densités D1 et D2 du fluide réfrigérant respectivement prises en entrée et en sortie du refroidisseur de gaz 2 à une valeur relativement constante.

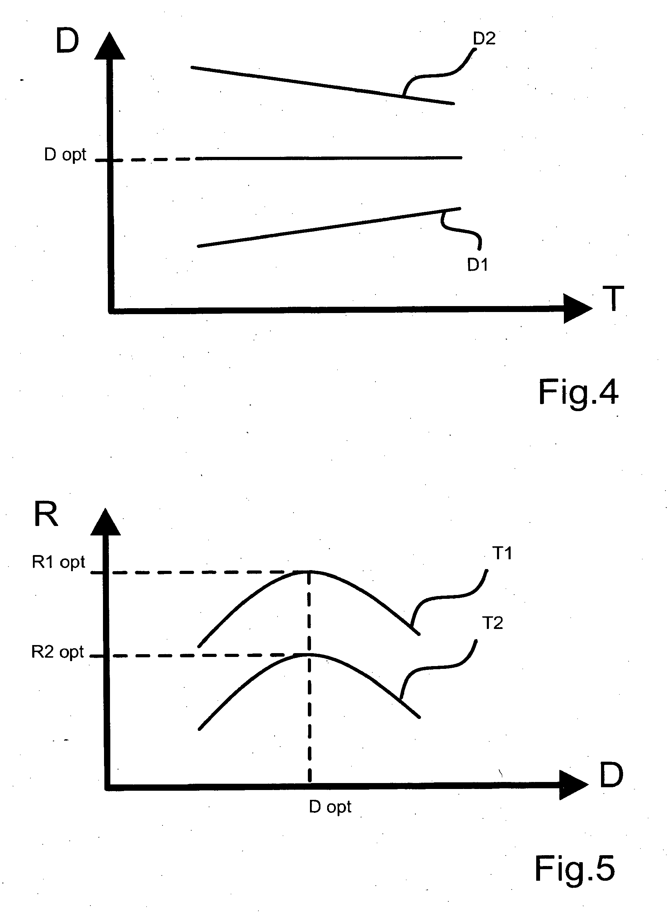

En effet, tel qu'illustré sur la fig.4, la densité D1 du fluide réfrigérant en entrée du refroidisseur de gaz 2 est une fonction linéaire croissante de la température T du fluide réfrigérant en sortie du refroidisseur de gaz 2, et la densité D2 du fluide réfrigérant en sortie du refroidisseur de gaz 2 est une fonction linéaire décroissante de la température T du fluide réfrigérant en sortie du refroidisseur de gaz 2, et ces deux fonctions sont de pente respective identique en valeur absolue. Il est avantageusement proposé par la présente invention d'utiliser l'accroissement de la densité D1 du fluide réfrigérant en entrée du refroidisseur de gaz 2 pour compenser l'abaissement de la densité D2 du fluide réfrigérant en sortie du refroidisseur de gaz 2. Pour la forme de réalisation illustrée sur la fig.2, la compensation est obtenue à partir d'une mise en communication d'une part des première et deuxième capacités 13,20 entre elles et d'autre part de la première capacité 13 avec la deuxième chambre élémentaire 12, cette mise en communication provoquant une homogénéisation de la température et de la pression du fluide réfrigérant à l'intérieur de l'enceinte 26, puis un équilibre de pression et de température de part et d'autre de la membrane 10. Pour la forme de réalisation illustrée sur la fig. 3, la compensation est obtenue à partir de la mise en oeuvre de l'unité de contrôle électronique 29 et des sondes de température 30,31.

Ces dispositions sont telles qu'il est possible d'optimiser le cycle thermodynamique que subit le fluide réfrigérant à partir d'un maintien du fluide réfrigérant à la densité optimale « D opt » qui induit un rendement optimum « R1 opt » et « R2 opt » selon la température respective T1 ou T2 du fluide réfrigérant en sortie du refroidisseur de gaz 2, tel qu'illustré sur la fig.5. Ce maintien est notamment obtenu à partir d'un dimensionnement adéquat des premier et deuxième capteurs de température 14,21.

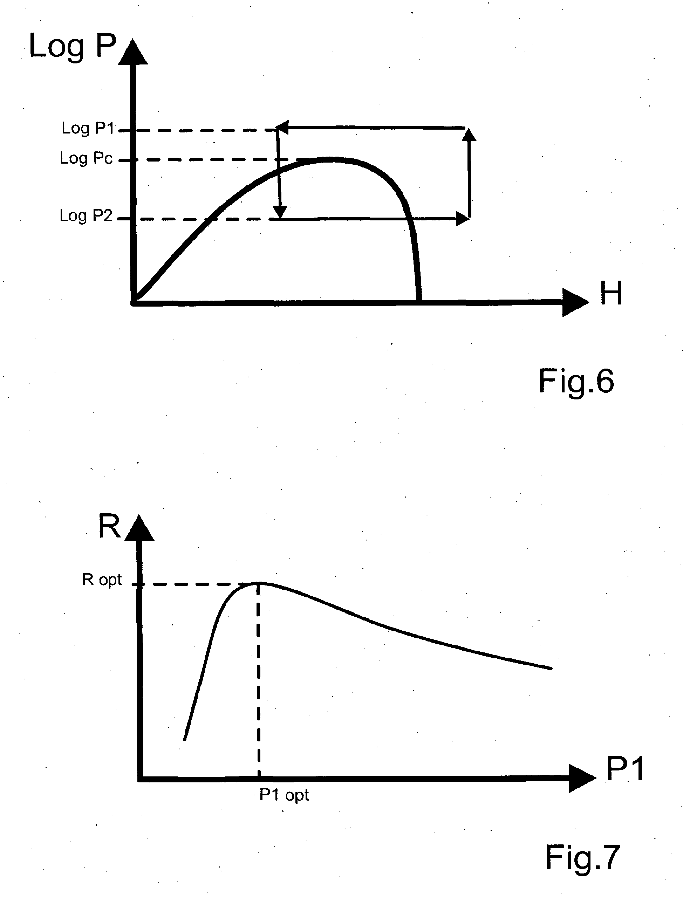

Le fluide réfrigérant est susceptible d'être un fluide réfrigérant dont la température critique est de l'ordre de 30°C, tel que le dioxyde de carbone par exemple, couramment dénommé dans le domaine par le code « R744 ». Dans ce cas, le cycle thermodynamique que subit le fluide réfrigérant peut être un cycle transcritique tel que celui illustré sur la fig.6. Un tel cycle transcritique comprend une première étape supercritique isobare à haute pression P1, supérieure à la pression critique Pc du fluide réfrigérant, et une deuxième étape subcritique isobare à basse pression P2, inférieure à la pression critique Pc du fluide réfrigérant. La première étape à haute pression P1 se déroule à l'intérieur du refroidisseur de gaz 2 et de la première face 7 de l'échangeur de chaleur interne 3 tandis que la deuxième étape à basse pression P2 se déroule à l'intérieur de l'évaporateur 5 et de la deuxième face 8 de l'échangeur de chaleur interne 3. La première étape vise à permettre un refroidissement du fluide réfrigérant et en conséquence un refroidissement de l'air au contact des éléments précités où elle se déroule, tandis que la deuxième étape vise à permettre un échauffement du fluide réfrigérant et en conséquence un échauffement de l'air au contact des éléments où elle se déroule.

Le rendement R d'un tel cycle thermodynamique en fonction de la pression P1 du fluide réfrigérant en sortie du refroidisseur de gaz 2 est représenté sur la fig.7. Il est remarquable qu'il n'existe qu'une valeur « P1 opt » de la pression P1 pour laquelle le rendement R est optimisé à la valeur « R opt », la valeur de « P1 opt » étant fonction de la température du fluide réfrigérant en sortie du refroidisseur de gaz 2.

## Revendications

1. Boucle de climatisation constitutive d'une installation de ventilation, de chauffage et/ou de climatisation d'un véhicule notamment, la boucle de climatisation comprenant au moins un refroidisseur de gaz (2) et au moins un organe de détente (4) qui est équipé de moyens de régulation d'un débit d'un fluide réfrigérant circulant à l'intérieur de la boucle de climatisation, les moyens de régulation comprenant un premier dispositif de mesure de température (14,30) qui est placé en sortie du refroidisseur de gaz (2) et un deuxième dispositif de mesure de température (21,31) qui est placé en entrée du refroidisseur de gaz (2), **caractérisée en ce que** les moyens de régulation comprennent une enceinte (26) comportant :
- une deuxième chambre élémentaire (12) de l'organe de détente (4),
- une première capacité (13) que comporte un premier capteur de température (14) qui constitue le premier dispositif de mesure de température, la première capacité (13) échangeant thermiquement avec le fluide réfrigérant sortant du refroidisseur de gaz (2), et
- une deuxième capacité (20) que comporte un deuxième capteur de température (21) qui constitue le deuxième dispositif de mesure de température, la deuxième capacité (20) échangeant thermiquement avec le fluide réfrigérant entrant dans le refroidisseur de gaz (2).

2. Boucle de climatisation selon la revendication 1, dans laquelle le fluide réfrigérant est un fluide majoritairement constitué d'au moins un composé organique.

3. Boucle de climatisation selon l'une quelconque des revendications 1 à 2, dans laquelle le fluide réfrigérant est un fluide dont la température critique est comprise entre 25°C et 35°C.

4. Boucle de climatisation selon la revendication 3, dans laquelle le fluide réfrigérant est principalement composé de dioxyde de carbone.

5. Boucle de cimatisation selon l'une quelconque des revendications 1 à 4, dans laquelle l'organe de détente (4) comprend une entrée (27) et une sortie (28) d'un fluide réfrigérant entre lesquelles est ménagé un canal de circulation (17) du fluide réfrigérant, l'organe de détente (4) comprenant en outre une chambre principale (9) logeant une membrane (10) qui sépare la chambre principale (9) en deux chambres élémentaires (11,12), dont une première chambre élémentaire (11) qui est en relation avec le canal de circulation (17), la deuxième chambre élémentaire (12) étant en relation avec le premier capteur de température (14), le premier capteur de température (14) étant en relation avec le deuxième capteur de température (21).

6. Boucle de climatisation selon la revendication 5, dans laquelle la mise en relation du premier capteur de température (14) avec le deuxième capteur de température (21) est obtenue à partir d'une mise en communication d'une première capacité (13) que comporte le premier capteur de température (14) avec une deuxième capacité (20) que comporte le deuxième capteur de température (21), cette mise en communication étant réalisée par l'intermédiaire d'un premier capillaire (22).

7. Boucle de climatisation selon la revendication 6, dans laquelle la mise en relation du premier capteur de température (14) avec la deuxième chambre élémentaire (12) est obtenue à partir d'une mise en communication de la première capacité (13) avec la deuxième chambre élémentaire (12), cette mise en communication étant réalisée par l'intermédiaire d'un deuxième capillaire (16).

8. Boucle de climatisation selon les revendications 6 et 7, dans laquelle la deuxième chambre élémentaire (12), la première capacité (13), la deuxième capacité (20), le premier capillaire (16) et le deuxième capillaire (21) forment conjointement une enceinte (26) de confinement d'un fluide de contrôle.

9. Boucle de climatisation selon la revendication 8, dans laquelle le fluide de contrôle est indifféremment identique ou différent du fluide réfrigérant.

10. Boucle de climatisation selon l'une quelconque des revendications 6 à 9, dans laquelle chacune des première (13) et deuxième (20) capacités est délimitée par un tube respectif (15,23) réalisé en un matériau thermiquement conducteur.

## Patentansprüche

1. Klimatisierungskreislauf, der ein wesentlicher Bestandteil einer Lüftungs-, Heizungs- und/oder Klimaanlage insbesondere eines Fahrzeugs ist, wobei der Klimatisierungskreislauf mindestens einen Gaskühler (2) und mindestens ein Expansionsorgan (4) enthält, das mit Einrichtungen zur Regulierung einer Durchflussmenge eines im Inneren des Klimatisierungskreislaufs fließenden Kühlfluids ausgestattet ist, wobei die Regulierungseinrichtungen eine erste Temperaturmessvorrichtung (14, 30), die am Ausgang des Gaskühlers (2) angeordnet ist, und eine zweite Temperaturmessvorrichtung (21, 31) enthalten, die am Eingang des Gaskühlers (2) angeordnet ist, **dadurch gekennzeichnet, dass** die Regulierungseinrichtungen einen Behälter (26) enthalten, der aufweist:
- eine zweite Elementarkammer (12) des Expansionsorgans (4),
- einen ersten Kondensator (13), den ein erster Temperaturfühler (14) aufweist, der die erste Temperaturmessvorrichtung bildet, wobei der erste Kondensator (13) in Wärmeaustausch mit dem aus dem Gaskühler (2) austretenden Kühlfluid steht, und
- einen zweiten Kondensator (20), den ein zweiter Temperaturfühler (21) aufweist, der die zweite Temperaturmessvorrichtung bildet, wobei der zweite Kondensator (20) in Wärmeaustausch mit dem in den Gaskühler (2) eintretenden Kühlfluid steht.

2. Klimatisierungskreislauf nach Anspruch 1, wobei das Kühlfluid ein Fluid ist, das zum größten Teil aus mindestens einer organischen Verbindung besteht.

3. Klimatisierungskreislauf nach einem der Ansprüche 1 bis 2, wobei das Kühlfluid ein Fluid ist, dessen kritische Temperatur zwischen 25°C und 35°C liegt.

4. Klimatisierungskreislauf nach Anspruch 3, wobei das Kühlfluid hauptsächlich aus einer Kohlendioxidverbindung besteht.

5. Klimatisierungskreislauf nach einem der Ansprüche 1 bis 4, wobei das Expansionsorgan (4) einen Eingang (27) und einen Ausgang (28) eines Kühlfluids enthält, zwischen denen ein Strömungskanal (17) des Kühlfluids ausgebildet ist, wobei das Expansionsorgan (4) außerdem eine Hauptkammer (9) enthält, in der eine Membran (10) untergebracht ist, die die Hauptkammer (9) in zwei Elementarkammern (11, 12) trennt, von denen eine erste Elementarkammer (11) mit dem Strömungskanal (17) gekoppelt ist, während die zweite Elementarkammer (12) mit dem ersten Temperaturfühler (14) gekoppelt ist, wobei der erste Temperaturfühler (14) mit dem zweiten Temperaturfühler (21) gekoppelt ist.

6. Klimatisierungskreislauf nach Anspruch 5, wobei die Kopplung des ersten Temperaturfühlers (14) mit dem zweiten Temperaturfühler (21) ausgehend von einer Verbindung eines ersten Kondensators (13), den der erste Temperaturfühler (14) aufweist, mit einem zweiten Kondensator (20), den der zweite Temperaturfühler (21) aufweist, erhalten wird, wobei diese Verbindung mittels einer ersten Kapillarleitung (22) gebildet wird.

7. Klimatisierungskreislauf nach Anspruch 6, wobei die Kopplung des ersten Temperaturfühlers (14) mit der zweiten Elementarkammer (12) ausgehend von einer Verbindung des ersten Kondensators (13) mit der zweiten Elementarkammer (12) erhalten wird, wobei diese Verbindung mittels einer zweiten Kapillarleitung (16) gebildet wird.

8. Klimatisierungskreislauf nach den Ansprüchen 6 und 7, wobei die zweite Elementarkammer (12), der erste Kondensator (13), der zweite Kondensator (20), die erste Kapillarleitung (22) und die zweite Kapillarleitung (16) zusammen einen Sicherheitsbehälter (26) eines Steuerfluids formen.

9. Klimatisierungskreislauf nach Anspruch 8, wobei das Steuerfluid unterschiedslos entweder gleich dem oder anders als das Kühlfluid ist.

10. Klimatisierungskreislauf nach einem der Ansprüche 6 bis 9, wobei jeder der ersten (13) und zweiten Kondensatoren (20) von einem Rohr (15, 23) begrenzt wird, das aus einem wärmeleitenden Material hergestellt ist.

## Claims

1. Air conditioning loop that is a component of a ventilation, heating and/or air conditioning installation of a vehicle in particular, the air conditioning loop comprising at least one gas cooler (2) and at least one expansion member (4) which is equipped with means for regulating a flow rate of a refrigerant circulating in the air conditioning loop, the regulation means comprising a first temperature measurement device (14, 30) which is placed at the outlet of the gas cooler (2) and a second temperature measurement device (21, 31) which is placed at the inlet of the gas cooler (2), **characterized in that** the regulation means comprise a enclosure (26) comprising:
- a second individual chamber (12) of the expansion member (4),
- a first volume (13) that a first temperature sensor (14) comprises which constitutes the first temperature measurement device, the first volume (13) exchanging heat with the refrigerant leaving the gas cooler (2), and
- a second volume (20) that a second temperature sensor (21) comprises, which constitutes the second temperature measurement device, the second volume (20) exchanging heat with the refrigerant entering into the gas cooler (2).

2. Air conditioning loop according to Claim 1, in which the refrigerant is a fluid mostly consisting of at least one organic compound.

3. Air conditioning loop according to either of Claims 1 and 2, in which the refrigerant is a fluid with a critical temperature of between 25°C and 35°C.

4. Air conditioning loop according to Claim 3, in which the refrigerant is mainly consists of carbon dioxide.

5. Air conditioning loop according to any one of Claims 1 to 4, in which the expansion member (4) comprises an inlet (27) and an outlet (28) for a refrigerant between which is formed a flow duct (17) for the refrigerant, the expansion member (4) also comprising a main chamber (9) housing a membrane (10) which splits the main chamber (9) into two individual chambers (11, 12), namely a first individual chamber (11) which is connected to the flow duct (17), the second individual chamber (12) being connected to the first temperature sensor (14), the first temperature sensor (14) being connected with the second temperature sensor (21).

6. Air conditioning loop according to Claim 5, in which the connection of the first temperature sensor (14) with the second temperature sensor (21) is obtained from a connection of a first volume (13) that the first temperature sensor (14) comprises with a second volume (20) that the second temperature sensor (21) comprises, this connection being made via a first capillary (22).

7. Air conditioning loop according to Claim 6, in which the connection of the first temperature sensor (14) with the second individual chamber (12) is obtained from a connection of the first volume (13) with the second individual chamber (12), this connection being made via a second capillary (16).

8. Air conditioning loop according to Claims 6 and 7, in which the second individual chamber (12), the first volume (13), the second volume (20), the first capillary (22) and the second capillary (16) jointly form an enclosure (26) for containing a control fluid.

9. Air conditioning loop according to Claim 8, in which the control fluid is, without preference, the same as or different from the refrigerant.

10. Air conditioning loop according to any one of Claims 6 to 9, in which each of the first (13) and second (20) volumes is delimited by a respective tube (15, 23) made of a thermally conductive material.
